# EUROPÄISCHE PATENTSCHRIFT

(11) **EP 3 268 825 B1**
(45) Veröffentlichungstag und Bekanntmachung des Hinweises auf die Patenterteilung: **21.10.2020**
(21) Anmeldenummer: 15725252.9
(22) Anmeldetag: 12.05.2015
(51) Int. Cl.: G05B 19/418

(54) **STEUEREINRICHTUNG FÜR EIN PRODUKTIONSMODUL, PRODUKTIONSMODUL MIT STEUEREINRICHTUNG SOWIE VERFAHREN ZUM BETREIBEN DER STEUEREINRICHTUNG**
CONTROL DEVICE FOR A PRODUCTION MODULE, PRODUCTION MODULE HAVING A CONTROL DEVICE, AND METHOD FOR OPERATING THE CONTROL DEVICE
DISPOSITIF DE COMMANDE D'UN MODULE DE PRODUCTION, MODULE DE PRODUCTION ÉQUIPÉ D'UN DISPOSITIF DE COMMANDE ET PROCÉDÉ DE FONCTIONNEMENT DU DISPOSITIF DE COMMANDE

(43) Veröffentlichungstag der Anmeldung: 17.01.2018
(73) Patentinhaber: Siemens Aktiengesellschaft, 80333 München (DE)
(72) Erfinder: FEITEN, Wendelin, 85579 Neubiberg (DE); WURM, Kai, 81739 München (DE); ZAHORCAK, Vladimir, 900 32 Borinka (SK)
(86) Internationale Anmeldenummer: PCT/EP2015/060418
(87) Internationale Veröffentlichungsnummer: WO 2016/180478

(56) Entgegenhaltungen:
- WO-A1-00/19350
- US-A1- 2004 010 339

## Beschreibung

Zeitgemäße Produktionssysteme zur Herstellung oder Bearbeitung von technischen Produkten weisen in der Regel eine Vielzahl von spezifischen, interagierenden Produktionsmodulen auf und werden zunehmend komplexer. An einem zu produzierenden oder zu bearbeitenden Produkt sind in der Regel eine Vielzahl von Bearbeitungs-, Produktions- oder Handhabungsschritten auszuführen, wofür im Produktionssystem eine Vielzahl von darauf spezialisierten Produktionsmodulen, wie zum Beispiel Roboter, CNC-Maschinen, 3D-Drucker, Reaktoren, Brenner, Heizanlagen oder Förderbänder vorgesehen sind. Die spezifischen Funktionalitäten der Produktionsmodule werden auch als Produktionsservices bezeichnet.

Die Produktionsmodule werden durch Betriebseinstellungen, das heißt Einstellungen ihrer Betriebsparameter, an eine spezifische Produktionsumgebung und/oder an spezifische Produkte angepasst. Die Betriebseinstellungen sind hierbei in der Regel einer Vielzahl von Einschränkungen unterworfen, die bauartbedingt sein können, oder aus einer Interaktion eines Produktionsmoduls mit einem Produkt oder mit einem anderen Produktionsmodul resultieren können; dies wird in der Patentanmeldung WO 00/19350 A1 sowie in der Patentanmeldung US 2004/010339 A1 beschrieben. Insbesondere können nicht abgestimmte Betriebseinstellungen verschiedener Produktionsmodule zu Einstellungskonflikten führen.

Es ist bekannt, die Betriebseinstellungen von Produktionsmodulen zentral im Produktionssystem zu verwalten. In der Praxis werden hierbei geeignete konfliktvermeidende Betriebseinstellungen häufig unter Mitwirkung von erfahrenen Einrichtern manuell ermittelt.

Eine Änderung, ein Ausfall, ein Austausch oder ein Hinzufügen eines Produktionsmoduls im Produktionssystem oder auch produktbedingte Änderungen führen allerdings häufig dazu, dass sich für manche Betriebseinstellungen neue oder geänderte Einschränkungen ergeben, die auch zu Konflikten verschiedener Betriebseinstellungen führen können. Falls ein solcher Konflikt nicht unverzüglich aufgelöst wird, kann dies zu Ausfallzeiten für das Produktionssystem führen. Solche Ausfallzeiten des Produktionssystems können auch bei Ausfall einer zentralen Verwaltung des Produktionssystems auftreten.

Es ist Aufgabe der vorliegenden Erfindung eine Steuereinrichtung für ein Produktionsmodul, ein Produktionsmodul sowie ein Verfahren zum Betreiben der Steuereinrichtung anzugeben, die flexibel auf Änderungen im Produktionssystem reagieren können.

Gelöst wird diese Aufgabe durch eine Steuereinrichtung mit den Merkmalen des Patentanspruchs 1 durch ein Produktionsmodul mit den Merkmalen des Patentanspruchs 14, durch ein Verfahren mit den Merkmalen des Patentanspruchs 15, durch ein Computerprogrammprodukt mit den Merkmalen des Patentanspruchs 16 sowie durch ein computerlesbares Speichermedium mit den Merkmalen des Patentanspruchs 17.

Erfindungsgemäß sind eine Steuereinrichtung für ein Produktionsmodul zum Bearbeiten oder Handhaben eines Produkts in einem eine Vielzahl von Produktionsmodulen aufweisenden Produktionssystem, ein Produktionsmodul sowie ein Verfahren zum Betreiben der Steuereinrichtung vorgesehen.

Ein Produkt kann hierbei z.B. ein Werkstück oder ein beliebiges anderes Produkt in verschiedenen Phasen eines Fertigungs-, Bearbeitungs- oder Verarbeitungsprozesses sein und insbesondere auch ein Ausgangs-, Zwischen- oder Endprodukt. Das Produktionsmodul kann insbesondere eine zur Produktion, Bearbeitung, Verarbeitung und/oder Handhabung eines Produkts beitragende Vorrichtung eines Produktionssystems mit spezifischer Funktionalität sein, z.B. ein Roboter, eine CNC-Maschine, ein 3D-Drucker, ein Reaktor, ein Brenner, eine Heizanlage, ein Förderband oder ein anderes Transportmodul.

Die erfindungsgemäße Steuereinrichtung verfügt über ein Einstellungsverwaltungsmodul zum Erfassen von Einschränkungen, die von Betriebseinstellungen des Produktionsmoduls einzuhalten sind, sowie zum jeweiligen Erzeugen eines eine erfasste Einschränkung angebenden und die dadurch eingeschränkte Betriebseinstellung identifizierenden Einschränkungsdatensatzes. Derartige Einschränkungen werden häufig auch als Constraints bezeichnet. Weiterhin ist ein Datenspeicher vorgesehen zum Speichern einer lokalen Einschränkungstabelle mit einer Vielzahl von Einschränkungsdatensätzen. Ein Abgleichmodul dient zum iterativen Einlesen von ersten Einschränkungsdatensätzen einer korrespondierenden Einschränkungstabelle eines ersten benachbarten Produktionsmoduls, zum iterativen Aufbauen der lokalen Einschränkungstabelle anhand der eingelesenen ersten Einschränkungsdatensätze durch deren Abgleich mit in der lokalen Einschränkungstabelle gespeicherten Einschränkungsdatensätzen sowie zum iterativen Weiterleiten von zweiten Einschränkungsdatensätzen der lokalen Einschränkungstabelle an ein zweites benachbartes Produktionsmodul. Das erste benachbarte Produktionsmodul kann hierbei auch mit dem zweiten benachbarten Produktionsmodul identisch sein. Darüber hinaus ist ein Steuermodul vorgesehen zum Setzen einer Betriebseinstellung gemäß einem diese Betriebseinstellung identifizierenden Einschränkungsdatensatz der lokalen Einschränkungstabelle.

Das erfindungsgemäße Produktionsmodul umfasst die erfindungsgemäße Steuereinrichtung.

Die durch die erfindungsgemäße Steuereinrichtung auszuführenden Verfahrensschritte sind Gegenstand des erfindungsgemäßen Verfahrens.

Ein wesentlicher Vorteil der Erfindung ist darin zu sehen, dass Angaben über Einschränkungen von Betriebseinstellungen durch lokale Kommunikation zwischen benachbarten Produktionsmodulen sukzessive über das Produktionssystem verteilt werden können. Insbesondere können durch Änderungen im Produktionssystem bedingte Änderungen dieser Einschränkungen effizient über das Produktionssystem verteilt werden. Eine zentrale Verwaltung ist hierfür nicht erforderlich. Auf diese Weise kann ein Aufwand für eine Einrichtung oder eine Änderung des Produktionssystems in vielen Fällen erheblich verringert werden.

Vorteilhafte Ausführungsformen und Weiterbildungen der Erfindung sind in den abhängigen Ansprüchen angegeben.

Nach einer vorteilhaften Ausführungsform der Erfindung kann ein jeweiliger Einschränkungsdatensatz eine Kennung zum Identifizieren der Betriebseinstellung und/oder eine Bereichsangabe oder eine Wertangabe zum Angeben der Einschränkung umfassen. Insbesondere kann die Kennung und/oder die Bereichs- oder Wertangabe in einer vorzugsweise standardisierten Normalform angegeben werden, um so einen Abgleich mit anderen in dieser Normalform angegebenen Einschränkungsdatensätzen zu vereinfachen.

Ferner kann das Einstellungsverwaltungsmodul dazu eingerichtet sein, durch das Produktionsmodul selbst bedingte Einschränkungen spezifisch zu erfassen und daraus lokale Einschränkungsdatensätze zu erzeugen. Das Abgleichmodul kann entsprechend dazu eingerichtet sein, die lokale Einschränkungstabelle mit den lokalen Einschränkungsdatensätzen zu initialisieren. Auf diese Weise kann die lokale Einschränkungstabelle schon initialisiert werden, bevor eine Interaktion des Produktionsmoduls mit Produkten oder mit benachbarten Produktionsmodulen stattfindet.

Weiterhin kann das Einstellungsverwaltungsmodul dazu eingerichtet sein, durch Interaktion des Produktionsmoduls mit dem Produkt und/oder mit einem benachbarten Produktionsmodul bedingte Einschränkungen spezifisch zu erfassen und daraus interaktionsbedingte Einschränkungsdatensätze zu erzeugen. Das Abgleichmodul kann entsprechend dazu eingerichtet sein, die interaktionsbedingten Einschränkungsdatensätze mit den in der lokalen Einschränkungstabelle gespeicherten Einschränkungsdatensätzen abzugleichen. Auf diese Weise kann das Produktionsmodul flexibel an eine aktuelle Umgebung im Produktionssystem angepasst werden.

Vorteilhafterweise kann das Abgleichmodul dazu eingerichtet sein, zum Abgleich von Einschränkungsdatensätzen jeweils dieselbe Betriebseinstellung betreffende Einschränkungen aus diesen Einschränkungsdatensätzen zu ermitteln und die ermittelten Einschränkungsdatensätze zu einer Gesamteinschränkung für diese Betriebseinstellung zu verknüpfen. Ein die Gesamteinschränkung angebender Einschränkungsdatensatz kann entsprechend in der lokalen Einschränkungstabelle gespeichert werden.

Nach einer vorteilhaften Ausführungsform der Erfindung kann das Einstellungsverwaltungsmodul dazu eingerichtet sein, ein Produkt und/oder ein benachbartes Produktionsmodul dynamisch zu detektieren. Infolge einer solchen Detektion kann durch das Einstellungsverwaltungsmodul eine Änderungsinformation generiert werden und an das Abgleichmodul und/oder an ein benachbartes Produktionsmodul übermittelt werden. Hierbei kann das Einstellungsverwaltungsmodul insbesondere dazu eingerichtet sein, infolge der Detektion eine Erfassung von durch Interaktion des Produktionsmoduls mit dem Produkt und/oder mit dem benachbarten Produktionsmodul bedingten Einschränkungen zu veranlassen. Auf diese Weise kann das Produktionsmodul flexibel an eine aktuelle und/oder geänderte Umgebung im Produktionssystem angepasst werden.

Darüber hinaus kann das Abgleichmodul dazu eingerichtet sein, infolge eines Empfangs einer Änderungsinformation einen Iterationsschritt beim Einlesen der ersten Einschränkungsdatensätze, beim Aufbauen der lokalen Einschränkungstabelle und/oder beim Weiterleiten der zweiten Einschränkungsdatensätze auszuführen.

Gemäß einer vorteilhaften Ausführungsform der Erfindung kann die lokale Einschränkungstabelle eine Versionsinformation enthalten, die infolge eines Empfangs einer Änderungsinformation und/oder infolge einer Ausführung eines Iterationsschrittes beim Einlesen der ersten Einschränkungsdatensätze, beim Aufbauen der lokalen Einschränkungstabelle und/oder beim Weiterleiten der zweiten Einschränkungsdatensätze geändert wird. Die Versionsinformation kann hierbei eine Version der lokalen Einschränkungstabelle angeben und/oder angeben, auf welchen Versionen von korrespondierenden Einschränkungstabellen benachbarter Produktionsmodule die lokale Einschränkungstabelle basiert. Insbesondere kann das Abgleichmodul dazu eingerichtet sein, beim Aufbau der lokalen Einschränkungstabelle deren Versionsinformation mit einer Version eines jeweiligen ersten Einschränkungsdatensatzes zu vergleichen und abhängig davon die lokale Einschränkungstabelle zu aktualisieren und/oder einen der zweiten Einschränkungsdatensätze weiterzuleiten. Durch eine derartige Versionsverwaltung kann in der Regel erreicht werden, dass Einschränkungsdatensätze bzw. Einschränkungstabellen nur aktualisiert werden, wenn tatsächlich aktuellere Daten vorliegen.

Weiterhin kann das Abgleichmodul dazu eingerichtet sein, festzustellen, ob sich die lokale Einschränkungstabelle bei einer Aktualisierung im Rahmen des iterativen Aufbaus ändert, und falls dies nicht zutrifft, einen Satz von Betriebseinstellungen zu ermitteln, die den in der lokalen Einschränkungstabelle angegebenen Einschränkungen genügen. Sobald sich die lokale Einschränkungstabelle bei einer Aktualisierung nicht mehr ändert, kann in vielen Fällen angenommen werden, dass bereits alle unmittelbar und mittelbar beitragenden Einschränkungen von Produktionsmodulen berücksichtigt sind. Dementsprechend kann nach einer solchen Feststellung die Ermittlung eines tatsächlich zu verwendenden Satzes von Betriebseinstellungen veranlasst werden.

Darüber hinaus kann vorgesehen sein, dass mindestens einer der Einschränkungsdatensätze zu einer Einschränkung eine Herkunftsinformation enthält, die angibt, durch welches Produktionsmodul diese Einschränkung bedingt ist. Das Abgleichmodul kann entsprechend dazu eingerichtet sein, bei Empfang einer ein Produktionsmodul betreffenden Änderungsinformation spezifisch einen Einschränkungsdatensatz mit einer dieses Produktionsmodul angebenden Herkunftsinformation zu aktualisieren. Auf diese Weise müssen nicht alle Einschränkungsdatensätze in der lokalen Einschränkungstabelle durchsucht werden. Stattdessen kann eine Suche auf Datensätze mit übereinstimmender Herkunftsinformation beschränkt werden.

Ein Ausführungsbeispiel der Erfindung wird nachfolgend anhand der Zeichnung näher erläutert. Dabei zeigen jeweils in schematischer Darstellung
- Figur 1: ein Produktionsmodul mit einer erfindungsgemäßen Steuereinrichtung im Zusammenwirken mit benachbarten Produktionsmodulen,
- Figur 2: ein Produktionssystem mit mehreren Produktionsmodulen,
- Figur 3: lokale Einschränkungstabellen verschiedener Produktionsmodule vor einem Abgleich und
- Figur 4: die lokalen Einschränkungstabellen nach dem Abgleich.

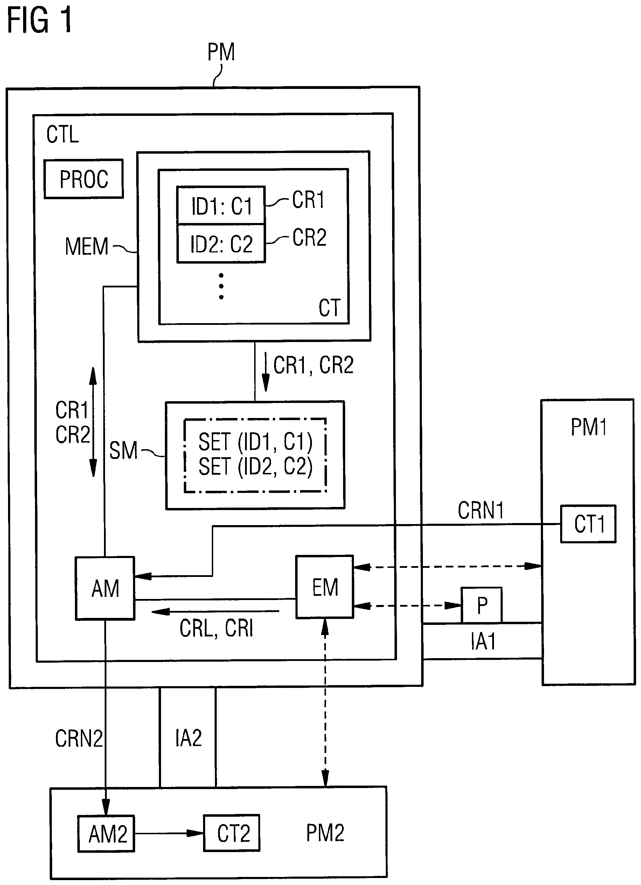

Figur 1 veranschaulicht ein Produktionsmodul PM mit einer erfindungsgemäßen Steuereinrichtung CTL im Zusammenwirken mit benachbarten Produktionsmodulen PM1 und PM2 eines Produktionssystems. Die Produktionsmodule PM, PM1 und PM2 dienen zum Bearbeiten oder Handhaben eines Produkts P im Produktionssystem. Ein solches Produktionssystem, zum Beispiel eine Fertigungsanlage zur Herstellung, Bearbeitung oder Verarbeitung von Werkstücken oder anderen Produkten weist in der Regel eine Vielzahl von Produktionsmodulen mit spezifischer Funktionalität auf. Das Produkt P kann ein Werkstück oder allgemein ein beliebiges, insbesondere körperliches Produkt in verschiedenen Phasen eines Fertigungs-, Bearbeitungs- oder Verarbeitungsprozesses, insbesondere auch ein Ausgangs-, Zwischen- oder Endprodukt sein. Die benachbarten Produktionsmodule PM1 und PM2 können zum Produktionsmodul PM räumlich oder logisch benachbart sein.

Die Produktionsmodule PM, PM1 und PM2 können jeweils eine zur Produktion, Bearbeitung, Verarbeitung und/oder Handhabung des Produkts beitragende Vorrichtung des Produktionssystems mit spezifischer Funktionalität sein, zum Beispiel jeweils ein Roboter, eine CNC-Maschine, ein 3D-Drucker, ein Reaktor, ein Brenner, eine Heizanlage oder ein Förderband oder ein anderes Transportmodul. Insbesondere kann ein jeweiliges Produktionsmodul PM, PM1 oder PM2 ein so genanntes Cyber Physical Module (CPM) oder Cyber Physical Production Module (CPPM) sein.

Das Produktionsmodul PM interagiert mit dem benachbarten Produktionsmodul PM1 in einem Interaktionsbereich IA1 und mit dem benachbarten Produktionsmodul PM2 in einem Interaktionsbereich IA2. Eine jeweilige Interaktion kann sich hierbei auch auf im jeweiligen Interaktionsbereich IA1 beziehungsweise IA2 befindliche Produkte, hier P, erstrecken. Die Interaktionsbereiche IA1 und IA2 sind jeweils ein räumlicher oder logischer Bereich, der mehreren Produktionsmodulen zugänglich ist oder von mehreren Produktionsmodulen beeinflusst werden kann, zum Beispiel ein Übergabebereich zwischen einem Roboterarm und einem Förderband oder zwischen zwei Roboterarmen. In solchen Interaktionsbereichen, hier IA1 und IA2, ist in der Regel eine Abstimmung von Bewegungen oder anderen Betriebseinstellungen der dort interagierenden Produktionsmodule erforderlich. Insbesondere werden in der Regel ein Bewegungsspielraum oder ein Spielraum einer anderen Betriebseinstellung eines Produktionsmoduls durch die Interaktion mit einem benachbarten Produktionsmodul eingeschränkt. Solche zunächst lokal auftretenden Einschränkungen können sich häufig auch auf nicht unmittelbar benachbarte Produktionsmodule des Produktionssystems auswirken, insofern ein Produktionsmodul häufig mit mehreren benachbarten Produktionsmodulen interagiert. Eine Interaktion mit einem ersten der benachbarten Produktionsmodule kann demnach Einschränkungen unterworfen sein kann, die aus Einschränkungen einer Interaktion mit einem zweiten der benachbarten Produktionsmodule resultieren. Es wird deshalb angestrebt, ausgehend von einer Menge einzelner Einschränkungen für Produktionsmodule eine Menge von Betriebseinstellungen zu ermitteln, die allen Einschränkungen von Produktionsmodulen des Produktionssystems genügen.

Unter einer Betriebseinstellung im obigen Sinne kann eine Einstellung von Betriebseigenschaften und/oder Betriebsparametern eines Produktionsmoduls verstanden werden, insbesondere eine Einstellung von physikalischen Parametern, Steuergrößen, Regelungsgrößen und/oder Prozessvariablen. Derartige Betriebseigenschaften oder Betriebsparameter können zum Beispiel eine Geschwindigkeit, eine Beschleunigung, eine Position und/oder eine Orientierung eines Produkts oder einer Handhabungsvorrichtung eines Produktionsmoduls sein. Auch Betriebsparameter, wie z.B. Abmessungen, Druck, Temperatur, etc. eines Interaktionsbereichs können als Betriebseinstellungen aufgefasst werden.

Eine Einschränkung im obigen Sinne stellt eine für eine jeweilige Betriebseinstellung einzuhaltende Betriebseinschränkung dar, zum Beispiel eine Wertangabe oder eine Bereichseingabe für physikalische oder logische Größen oder eine physikalische Nebenbedingung. Eine solche Einschränkung kann beispielsweise durch eine Gleichung oder eine Ungleichung repräsentiert oder modelliert werden. So kann für eine Betriebseinstellung einer Geschwindigkeit zum Beispiel ein zulässiger Geschwindigkeitsbereich oder ein Geschwindigkeitswert als Einschränkung vorgegeben werden. Als zusätzliche Nebenbedingung kann hierbei zum Beispiel gefordert werden, dass eine Geschwindigkeit eines Roboterarms und eine Geschwindigkeit eines Förderbands bei einer Produktübergabe im Wesentlichen gleich sind.

Im Allgemeinen lassen sich derartige Einschränkungen hinsichtlich ihrer Ursache unterscheiden. So gibt es zum Einen durch ein jeweiliges Produktionsmodul selbst bedingte Einschränkungen. Dies können insbesondere bauartbedingte Einschränkungen wie z.B. Mindestgeschwindigkeit oder Höchstgeschwindigkeit eines Förderbandes sein.

Zum Anderen gibt es durch Interaktion eines jeweiligen Produktionsmoduls mit einem jeweiligen Produkt bedingte Einschränkungen. Diese sind in der Regel für ein Produkt spezifisch und in einem Modell eines Produktionsprozesses für das Produkt enthalten. So ist zum Beispiel beim Transport einer schon gefüllten, aber noch nicht verschlossenen Flasche darauf zu achten, dass die Flasche im Wesentlichen senkrecht gehalten wird und dass eine Obergrenze bei ihrer Beschleunigung eingehalten wird.

Darüber hinaus gibt es Einschränkungen, die durch Interaktion zwischen zwei oder mehreren Produktionsmodulen bedingt sind. So sollten zum Beispiel bei einer Übergabe von Produkten zwischen zwei Produktionsmodulen in der Regel die Geschwindigkeiten der Handhabungsvorrichtungen beim abgebenden und beim annehmenden Produktionsmodul im Wesentlichen gleich sein.

Ferner gibt es Einschränkungen, die durch das Produktionssystem oder durch eine Umgebung des Produktionsmoduls bedingt sind, zum Beispiel eine Obergrenze für einen Stromverbrauch des gesamten Produktionssystems.

Insofern sich die Betriebseinstellungen von benachbarten Produktionseinheiten gegenseitig beeinflussen, sind die Einschränkungen benachbarter Produktionseinheiten miteinander verknüpft und sie beeinflussen sich demnach gegenseitig. Damit können sich die Einschränkungen eines Produktionsmoduls auch mittelbar auf die Einschränkungen nicht direkt benachbarter Produktionsmodule auswirken, potentiell über das ganze Produktionssystem hinweg. Erfindungsgemäß werden die Einschränkungen der Produktionsmodule, vorzugsweise aller Produktionsmodule des Produktionssystems, iterativ aus lokal ermittelten Einschränkungen der Produktionsmodule ermittelt.

Im vorliegenden Ausführungsbeispiel weisen die Produktionsmodule PM1 und PM2 jeweils eine der Steuereinrichtung CTL des Produktionsmoduls PM entsprechende Steuereinrichtung auf. Aus Übersichtlichkeitsgründen sind in Figur 1 die Steuereinrichtungen der Produktionsmodule PM1 und PM2 nicht dargestellt.

Die Steuereinrichtung CTL des Produktionsmoduls PM weist einen Datenspeicher MEM mit einer lokalen Einschränkungstabelle CT auf. Die lokale Einschränkungstabelle CT umfasst eine Vielzahl von darin gespeicherten Einschränkungsdatensätzen CR1, CR2, ... für lokal bedingte Einschränkungen sowie für Einschränkungen von unmittelbar und mittelbar benachbarten Produktionsmodulen, hier PM1 und PM2. Insbesondere kann die lokale Einschränkungstabelle CT auch nichtlokale und globale Einschränkungen enthalten.

Der Einschränkungsdatensatz CR1 umfasst eine Kennung ID1, die eine spezifische Betriebseinstellung identifiziert, zum Beispiel "V_{C}" für eine Geschwindigkeit eines Förderbandes. Der Kennung ID1 ist eine Einschränkungsangabe C1 zugeordnet, die eine Einschränkung der durch ID1 identifizierten Betriebseinstellung angibt, zum Beispiel einen Wertebereich oder ein Werteintervall für die mögliche Geschwindigkeit eines Förderbandes. Analog dazu umfasst der Einschränkungsdatensatz CR2 eine Kennung ID2, die eine weitere Betriebseinstellung identifiziert, und dieser zugeordnet, eine Einschränkungsangabe C2, die eine Einschränkung dieser Betriebseinstellung angibt. Vorzugsweise kann ein Einschränkungsdatensatz CR1 oder CR2 eine Herkunftsinformation enthalten, die angibt, durch welches Produktionsmodul diese Einschränkung bedingt ist.

Das benachbarte Produktionsmodul PM1 enthält entsprechend eine korrespondierten Einschränkungstabelle CT1 und das benachbarte Produktionsmodul PM2 eine korrespondierende Einschränkungstabelle CT2. Beide Einschränkungstabellen CT1 und CT2 sind aus Sicht ihres jeweiligen Produktionsmoduls PM1 beziehungsweise PM2 lokale Einschränkungstabellen.

Zum Ausführen aller Verfahrensschritte weist die Steuereinrichtung CTL einen Prozessor PROC auf.

Weiterhin verfügt die Steuereinrichtung CTL über ein Einstellungsverwaltungsmodul EM zum dynamischen Erfassen von Einschränkungen, die von Betriebseinstellungen des Produktionsmoduls PM einzuhalten sind sowie zum jeweiligen Erzeugen eines die erfasste Einschränkung angebenden und die dadurch eingeschränkte Betriebseinstellung identifizierenden Einschränkungsdatensatzes.

Insbesondere dient das Einstellungsverwaltungsmodul dazu, durch das Produktionsmodul PM selbst bedingte, lokale Einschränkungen spezifisch zu erfassen und daraus lokale Einschränkungsdatensätze CRL zu erzeugen. Darüber hinaus detektiert das Einstellungsverwaltungsmodul EM - wie in Figur 1 durch punktierte Doppelpfeile angedeutet - die Produktionsmodule PM1 und PM2 sowie das im Interaktionsbereich IA1 befindliche Produkt P dynamisch. Infolge dieser Detektionen erfasst das Einstellungsverwaltungsmodul EM spezifisch Einschränkungen, die durch Interaktion des Produktionsmoduls PM mit dem Produkt P sowie mit den benachbarten Produktionsmodulen PM1 und PM2 bedingt sind, und erzeugt daraus interaktionsbedingte Einschränkungsdatensätze CRI. Die lokalen und interaktionsbedingten Einschränkungsdatensätze CRL bzw. CRI werden vom Einstellungsverwaltungsmodul EM zu einem Abgleichmodul AM übermittelt, das deren Speicherung in der lokalen Einschränkungstabelle CT veranlasst.

Das Abgleichmodul AM der Steuereinrichtung CTL ist mit dem Datenspeicher MEM sowie mit dem Einstellungsverwaltungsmodul EM gekoppelt. Das Abgleichmodul AM dient zum ereignisgesteuerten, iterativen Einlesen von ersten Einschränkungsdatensätzen CRN1 der korrespondierenden Einschränkungstabelle CT1, zum iterativen Aufbauen und Aktualisieren der lokalen Einschränkungstabelle CT anhand der eingelesenen ersten Einschränkungsdatensätze CRN1 sowie zum iterativen Weiterleiten von zweiten Einschränkungsdatensätzen CRN2 der lokalen Einschränkungstabelle CT an das benachbarte Produktionsmodul PM2. Die zweiten Einschränkungsdatensätze CRN2 werden hierbei an ein dem Abgleichmodul AM entsprechendes Abgleichmodul AM2 des Produktionsmoduls PM2 übermittelt. Das Abgleichmodul AM2 veranlasst daraufhin eine Aktualisierung der Einschränkungstabelle CT2 anhand der übermittelten zweiten Einschränkungsdatensätze CRN2.

Durch das Abgleichmodul AM wird die Einschränkungstabelle CT anhand der lokalen Einschränkungen aus den lokalen Einschränkungsdatensätzen CRL initialisiert. Weiterhin werden durch das Abgleichmodul AM die in der Einschränkungstabelle CT enthaltenen Einschränkungsdatensätze CR1, CR2, ... mit den Einschränkungen der interaktionsbedingten Einschränkungsdatensätze CRI abgeglichen. Zu diesem Zweck werden die in der Einschränkungstabelle gespeicherten Einschränkungsdatensätze CR1, CR2, ... durch das Abgleichmodul AM abgerufen und in aktualisierter Form wieder abgespeichert.

Ferner verfügt die Steuereinrichtung CTL über ein Steuermodul SM zum Setzen von Betriebseinstellungen des Produktionsmoduls PM gemäß dem in der Einschränkungstabelle CT gespeicherten Einschränkungsdatensätzen CR1, CR2 ....

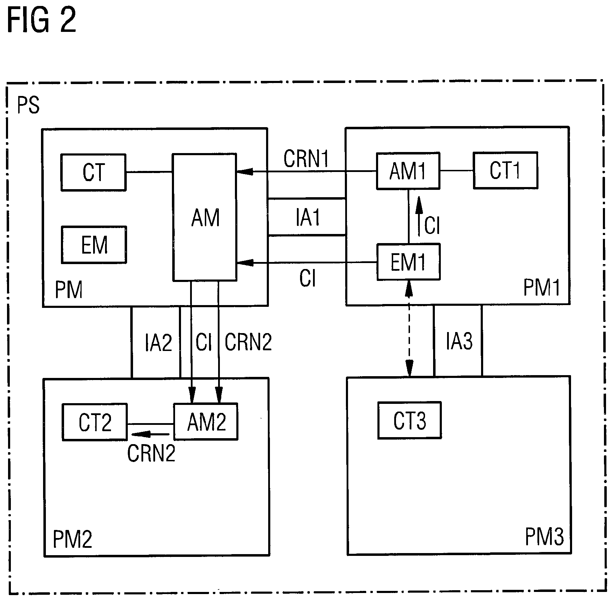

In Figur 2 ist ein Produktionssystem PS mit einer Vielzahl von Produktionsmodulen, hier exemplarisch PM, PM1, PM2 und PM3 schematisch dargestellt. Es sei angenommen, dass die Produktionsmodule PM1, PM2 und PM3 wie das Produktionsmodul PM über eine erfindungsgemäße Steuereinrichtung CTL verfügen, die in Figur 2 aus Übersichtlichkeitsgründen nicht dargestellt ist. Ansonsten bezeichnen in Figur 2 diejenigen Bezugszeichen, die mit Bezugszeichen in Figur 1 übereinstimmen, dasselbe Objekt wie in Figur 1.

Das Produktionsmodul PM3 ist zum Produktionsmodul PM1 benachbart und teilt sich mit diesem einen gemeinsamen Interaktionsbereich IA3. Darüber hinaus verfügt das Produktionsmodul PM3 über eine für dieses Produktionsmodul lokale Einschränkungstabelle CT3.

Das Produktionsmodul PM1 verfügt über ein Abgleichmodul AM1 sowie über ein daran gekoppeltes Einstellungsverwaltungsmodul EM1.

Das Einstellungsverwaltungsmodul EM1 des Produktionsmoduls PM1 detektiert - wie durch einen punktierten Doppelpfeil angedeutet - dynamisch das benachbarte Produktionsmodul PM3 und generiert infolge dieser Detektion eine Änderungsinformation CI. Eine solche Detektion kann insbesondere bei einem Neuanschluss des Produktionsmoduls PM3 an das Produktionsmodul PM1 erfolgen. Analog dazu kann die Änderungsinformation CI auch bei Detektion eines Produkts P im Interaktionsbereich IA3 generiert werden. Die Änderungsinformation CI wird vom Einstellungsverwaltungsmodul EM1 zum Abgleichmodul AM1 sowie zum Abgleichmodul AM des Produktionsmoduls PM übermittelt. Auf diese Weise veranlasst das Einstellungsverwaltungsmodul EM1 eine Erfassung von durch Interaktion des Produktionsmoduls PM1 mit dem Produkt und/oder mit dem benachbarten Produktionsmodul PM3 bedingten Einschränkungen. Aufgrund des Empfangs der Änderungsinformation CI führen die Abgleichmodule AM und AM1 einen Iterationsschritt beim Einlesen von ersten Einschränkungsdatensätzen, hier CRN1, beim Aufbauen oder Aktualisieren der lokalen Einschränkungstabellen, hier CT und CT1, und/oder beim Weiterleiten der zweiten Einschränkungsdatensätze, hier CRN2, aus. Infolge des Empfangs der Änderungsinformation CI übermittelt das Abgleichmodul AM die Änderungsinformation CI zum Abgleichmodul AM2 des Produktionsmoduls PM2 und löst dadurch eine entsprechende Aktualisierung der Einschränkungstabelle CT2 anhand der ebenfalls übermittelten zweiten Einschränkungsdatensätze CRN2 aus. Die Abgleichmodule AM, AM1 und AM2 führen den iterativen Abgleich jeweils lokal, in gleicher Weise und parallel zueinander aus. Somit ist keine zentrale oder globale Steuerung oder Synchronisierung dieses Abgleichvorgangs erforderlich.

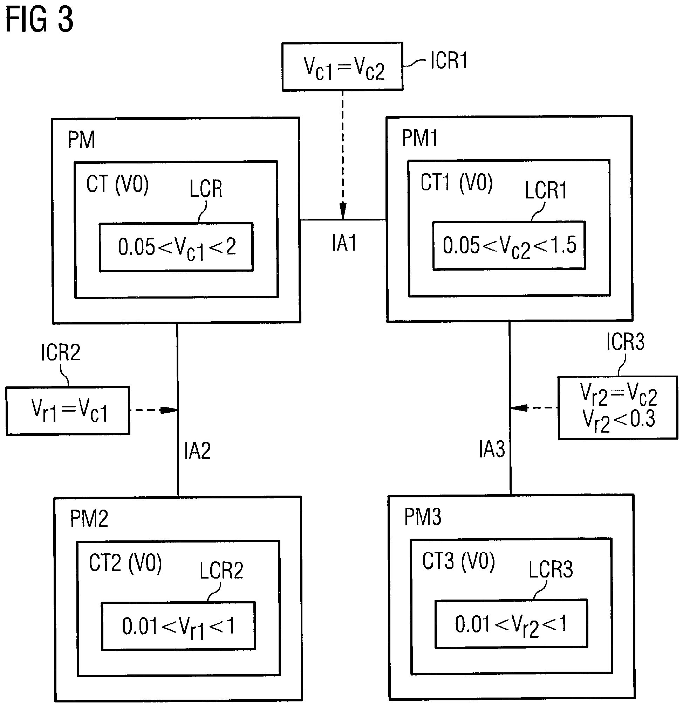

Figur 3 zeigt die lokalen Einschränkungstabellen CT, CT1, CT2 und CT3 der Produktionsmodule PM, PM1, PM2 beziehungsweise PM3 vor einem Abgleich der Einschränkungstabellen CT, CT1, CT2 und CT3 in schematischer Darstellung. In Figur 3 bezeichnen Bezugszeichen, die mit Bezugszeichen in Figur 1 oder Figur 2 übereinstimmen, jeweils dasselbe Objekt.

Die Einschränkungstabellen CT, CT1, CT2 und CT3 weisen jeweils mindestens einen lokalen Einschränkungsdatensatz LCR, LCR1, LCR2 beziehungsweise LCR3 auf, der jeweils aus einer durch das jeweilige Produktionsmodul, PM, PM1, PM2 beziehungsweise PM3 selbst bedingten Einschränkung erzeugt wird. Eine durch einen jeweiligen lokalen Einschränkungsdatensatz LCR1, ..., LCR3 eingeschränkte Betriebseinstellung wird durch eine Kennung identifiziert.

Im vorliegenden Ausführungsbeispiel wird durch das Produktionsmodul PM eine lokale Einschränkung einer durch eine Kennung V_{c1} identifizierten Geschwindigkeit eines lokalen, ersten Förderbandes erfasst und daraus der lokale Einschränkungsdatensatz LCR generiert. Die Geschwindigkeit V_{c1} ist im Einschränkungsdatensatz LCR auf einen Geschwindigkeitsbereich von 0,05 bis 2 (in willkürlichen Einheiten) eingeschränkt.

Analog dazu wird durch den lokalen Einschränkungsdatensatz LCR1 in der Einschränkungstabelle CT1 eine durch eine Kennung V_{c2} identifizierte Geschwindigkeit eines lokalen, zweiten Förderbandes des Produktionsmoduls PM1 auf eine Geschwindigkeit zwischen 0,05 und 1,5 eingeschränkt.

Durch den lokalen Einschränkungsdatensatz LCR2 der Einschränkungstabelle CT2 wird eine durch eine Kennung Vᵣ₁ identifizierte Geschwindigkeit eines lokalen, ersten Roboterarmes des Produktionsmoduls PM2 auf einen zulässigen Wertebereich von 0,01 bis 1 eingeschränkt.

Schließlich wird durch den lokalen Einschränkungsdatensatz LCR3 der Einschränkungstabelle CT3 eine Einschränkung einer durch eine Kennung Vᵣ₂ identifizierten Geschwindigkeit eines lokalen, zweiten Roboterarms des Produktionsmoduls PM3 auf einem Wertebereich zwischen 0,01 und 1 eingeschränkt.

Die Einschränkungstabellen CT, ..., CT3 werden durch die lokalen Einschränkungsdatensätze LCR, ..., LCR3 jeweils initialisiert. Dabei wird den Einschränkungstabellen CT, ..., CT3 jeweils eine eindeutige initiale Versionssummer, zum Beispiel die Ziffer 0, als Versionsinformation V0 zugeordnet.

Die Interaktion der Produktionsmodule PM1, ..., PM3 über die Interaktionsbereiche IA1, IA2 und IA3 bedingt verschiedene neue Einschränkungen der Betriebseinstellungen. Im vorliegenden Ausführungsbeispiel bedingt die Interaktion der Produktionsmodule PM und PM1 über den Interaktionsbereich IA1, dass die Geschwindigkeiten des ersten und zweiten Förderbandes im Wesentlichen gleich sind, das heißt V_{c1}=V_{c2}.

Weiterhin bedingt die Interaktion der Produktionsmodule PM und PM2 über den Interaktionsbereich IA2, dass die Geschwindigkeiten des ersten Roboterarms und des ersten Förderbandes im Wesentlichen gleich sind, das heißt Vᵣ₁=V_{c1}.

Darüber hinaus bedingt die Interaktion der Produktionsmodule PM1 und PM3 über den Interaktionsbereich IA3, dass die Geschwindigkeiten des ersten und zweiten Förderbandes im Wesentlichen gleich und kleiner als 0,3 sind, das heißt Vᵣ₂=V_{c2} und Vᵣ₂<0,3.

Die vorstehenden interaktionsbedingten Einschränkungen werden vom Einstellungsverwaltungsmodul des jeweiligen Produktionsmoduls PM, PM1, PM2 beziehungsweise PM3 erfasst und daraus interaktionsbedingte Einschränkungsdatensätze ICR1, ICR2 beziehungsweise ICR3 erzeugt. Letztere werden zum Abgleichmodul des jeweiligen Produktionsmoduls PM, ..., PM3 übermittelt. Das jeweilige Abgleichmodul gleicht dann einen jeweiligen interaktionsbedingten Einschränkungsdatensatz ICR1, ICR2 beziehungsweise ICR3 mit in der jeweiligen Einschränkungstabelle CT, CT1, CT2 beziehungsweise CT3 gespeicherten Einschränkungsdatensätzen, hier LCR, ..., LCR3 ab. Vorzugsweise veranlasst das jeweilige Abgleichmodul infolge eines solchen Abgleichs einen Iterationsschritt beim Einlesen von ersten Einschränkungsdatensätzen CRN1, beim Aufbauen der lokalen Einschränkungstabelle und/oder beim Weiterleiten von zweiten Einschränkungsdatensätzen CRN2. Auf diese Weise werden aktualisierte Einschränkungsdatensätze CRN1 und/oder CRN2 zwischen benachbarten Produktionsmodulen übermittelt und mit einer jeweiligen lokalen Einschränkungstabelle abgeglichen.

Zum Abgleich von Einschränkungsdatensätzen werden zunächst Betriebseinstellungen identifizierende Kennungen verglichen und jeweils dieselbe Betriebseinstellung betreffende Einschränkungen miteinander verknüpft. Eine solche Verknüpfung kann zum Beispiel dadurch erfolgen, dass für verschiedene Wertebereiche oder Werteintervalle eine Schnittmenge oder ein Schnittintervall gebildet wird und/oder eine Und-Verknüpfung durchgeführt wird. Eine daraus resultierende Gesamteinschränkung erfüllt dann alle Bedingungen der verknüpften Einschränkungen. Vorteilhafterweise kann eine Normalform zur Angabe von Einschränkungen vorgesehen sein, die das Bilden einer Gesamteinschränkung in der Regel vereinfacht.

Infolge eines Abgleichs und/oder eines Iterationsschritts wird die Versionsinformation einer jeweiligen Einschränkungstabelle CT, ..., CT3 geändert, zum Beispiel inkrementiert, sofern sich hierbei Einschränkungen ändern. Weiterhin kann vorgesehen sein, dass ein gespeicherter Einschränkungsdatensatz nur dann aktualisiert wird, falls ein aktualisierender Einschränkungsdatensatz eine aktuellere Versionsinformation aufweist, als die jeweilige Einschränkungstabelle und/oder ein jeweils zu aktualisierender Einschränkungsdatensatz.

Der iterative Abgleich wird solange wiederholt, bis sich eine jeweilige Einschränkungstabelle CT, ...., CT3 bei ihrer Aktualisierung nicht mehr ändert, wodurch das Verfahren konvergiert und terminiert. Auf diese Weise werden die Einschränkungen sowohl lokaler als auch nichtlokaler Betriebseinstellungen durch lokale Kommunikation zwischen benachbarten Produktionsmodulen sukzessive und adaptiv über das gesamte Produktionssystem verbreitet. Aufgrund der dezentralen, lokalen Ausführung des Verfahrens ist eine zentrale Steuerinstanz zur Propagation von Einschränkungen nicht erforderlich.

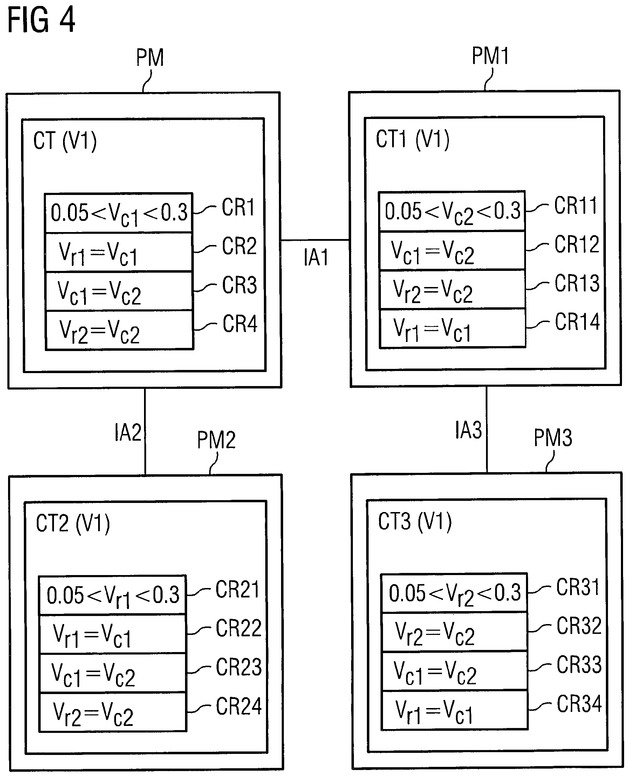

Figur 4 zeigt die lokalen Einschränkungstabellen CT, CT1, CT2 und CT3 der Produktionsmodule PM, PM1, PM2 und PM3 nach erfolgtem Abgleich in schematischer Darstellung. Auch in Figur 4 bezeichnen Bezugszeichen, die mit Bezugszeichen in den Figuren 1 bis 3 übereinstimmen, dasselbe Objekt.

Nach der Konvergenz des iterativen Abgleichs enthalten alle Einschränkungstabellen CT, CT1, CT2 und CT3 für die Betriebseinstellungen der unmittelbar oder mittelbar interagierenden Produktionsmodule PM, PM1, PM2 und PM3 die gleichen Einschränkungen. So stimmen die Einschränkungsdatensätze CR1, CR2, CR3 und CR4 der Einschränkungstabelle CT bis auf die Reihenfolge inhaltlich mit Einschränkungsdatensätzen CR11, CR12, CR13 und CR14 der Einschränkungstabelle CT1, mit Einschränkungsdatensätzen CR21, CR22, CR23, CR24 der Einschränkungstabelle CT2 sowie mit Einschränkungsdatensätzen CR31, CR32, CR33 und CR34 der Einschränkungstabelle CT3 überein.

Aufgrund des Abgleichs ist den Einschränkungstabellen CT, ..., CT3 eine aktualisierte Versionsinformation V1 zugeordnet, die gegenüber der initialen Versionsinformation V0 inkrementiert ist. Vorzugsweise enthält die Versionsinformation V1 neben einer Versionsangabe bezüglich der jeweiligen lokalen Einschränkungstabelle auch eine Angabe, auf welchen Versionen von korrespondierenden Einschränkungstabellen benachbarter Produktionsmodule die jeweilige lokale Einschränkungstabelle basiert.

Vorzugsweise kann eine jeweilige Versionsinformation durch eine oder mehrere Versionsnummern dargestellt werden, die wie folgt verwaltet werden:
Sobald eine Interaktion eines Produktionsmoduls mit einem Produkt eine interaktionsbedingte Einschränkung bedingt, wird diese in die Einschränkungstabelle des betreffenden Produktionsmoduls eingetragen und die Versionsnummer dieser Einschränkungstabelle inkrementiert.

Bei Einschränkungen, die durch eine Interaktion von zwei oder mehreren Produktionsmodulen bedingt sind, werden diese in die Einschränkungstabellen aller beteiligten Produktionsmodule eingetragen und die Versionsnummern dieser Einschränkungstabellen werden inkrementiert. In der Einschränkungstabelle eines jeweiligen Produktionsmoduls wird insbesondere vermerkt, auf welchen Versionen der Einschränkungstabellen der benachbarten Produktionsmodule sie beruht. Wenn der Einschränkungstabelle in einer der benachbarten Produktionsmodule eine neue Versionsnummer zugeordnet wird, die höher ist als die Versionsnummer der lokalen Einschränkungstabelle, wird letztere auf der Grundlage der Einschränkungstabelle mit höherer Versionsnummer aktualisiert. Falls zwischen dieser aktualisierten Einschränkungstabelle und der ursprünglichen Einschränkungstabelle ein Unterschied festgestellt wird, wird die eigene Versionsnummer ebenfalls inkrementiert. Dies kann wiederum eine Aktualisierung von Einschränkungstabellen interagierender Produktionsmodule durch Übermittlung von Änderungsinformation und/oder ersten und oder zweiten Einschränkungsdatensätzen auslösen.

Insofern sich die Einschränkungstabellen nach endlich vielen solcher Aktualisierungen nicht mehr ändern, enthalten diese Einschränkungstabellen eine Gesamtheit derjenigen Einschränkungen für andere Produktionsmodule, die mit der betreffenden Produktionseinheit in unmittelbarer oder mittelbarer Interaktion stehen.

Diejenigen Betriebseinstellungen, die allen in einer Einschränkungstabelle erhaltenen Einschränkungen genügen, lassen sich, sofern existent, mit standardisierten Rechenverfahren effizient ermitteln, zum Beispiel durch so genanntes Merging von Normalformen oder durch Simplexverfahren. Die für ein jeweiliges Produktionsmodul gefundenen Betriebseinstellungen sind damit in der Regel auch im gesamten Produktionssystem zulässig, das heißt sie genügen allen Einschränkungen des Produktionssystems, die eine Auswirkung auf diese Betriebseinstellungen haben.

Im Verlauf einer Produktion kann sich eine Belegung der Produktionsmodule häufig ändern. So können zum Beispiel Produktionsschritte abgeschlossen, Produkte zwischen verschiedenen Produktionsmodulen übergeben und/oder eine Produktion neuer Produkte aufgenommen werden. Damit fallen in der Regel frühere Einschränkungen weg, und es kommen andere Einschränkungen neu hinzu. Auf diese Weise ändern sich auch die Einschränkungstabellen. Erfindungsgemäß wird infolge einer solchen Änderung das Verfahren zur Aktualisierung der Einschränkungstabellen wieder aufgenommen und solange weitergeführt, bis sich die Einschränkungstabellen nicht mehr weiter verändern. Wie oben bereits beschrieben werden hierbei auch die Versionsnummern sukzessive inkrementiert.

Gegenüber einer zentralen Verwaltung der Einschränkungen von Betriebseinstellungen erweist sich die vorstehend beschriebene Erfindung insofern als vorteilhaft, als sich ein Gesamtverhalten des Produktionssystems dezentral aus lokalen Eigenschaften der Produktionsmodule ermitteln lässt und sich gewissermaßen selbst organisiert. Dies senkt insbesondere einen Aufwand für eine Einrichtung des Produktionssystems. Aufgrund des erfindungsgemäßen dezentralen Abgleichs der Einschränkungstabellen ist das Produktionssystem auch robuster gegenüber Störungen. Wenn zum Beispiel ein Produktionsmodul ausfällt, verändert sich eine Topologie des Produktionssystems sowie die Versionsnummern der Einschränkungstabellen. Diese Änderungen werden auf dezentrale Weise durch lokale Kommunikation durch das gesamte Produktionssystem propagiert, wodurch lokal, das heißt durch ein jeweiliges Produktionsmodul, entscheidbar ist, welche Produktionsaufträge auf dem eingeschränkten Produktionssystem noch ausführbar sind.

## Patentansprüche

1. Steuereinrichtung (CTL) für ein Produktionsmodul (PM) zum Bearbeiten oder Handhaben eines Produkts (P) in einem eine Vielzahl von Produktionsmodulen (PM,PM1,...,PM3) aufweisenden Produktionssystem (PS), mit
a) einem Einstellungsverwaltungsmodul (EM)zum Erfassen von Einschränkungen, die von Betriebseinstellungen des Produktionsmoduls (PM) einzuhalten sind, sowie zum jeweiligen Erzeugen eines eine erfasste Einschränkung angebenden und die dadurch eingeschränkte Betriebseinstellung identifizierenden Einschränkungsdatensatzes (CR1, CR2,...), wobei das Einstellungsverwaltungsmodul (EM) dazu eingerichtet ist, ein Produkt (P) dynamisch zu detektieren, infolge einer solchen Detektion eine Änderungsinformation (CI) zu generieren, die Änderungsinformation (CI) an ein Abgleichmodul (AM) und/oder an ein benachbartes Produktionsmodul (PM1, PM2) zu übermitteln und infolge der Detektion eine Erfassung von durch Interaktion des Produktionsmoduls (PM) mit dem Produkt (P) bedingten Einschränkungen zu veranlassen,
b) einem Datenspeicher (MEM) zum Speichern einer lokalen Einschränkungstabelle (CT) mit einer Vielzahl von Einschränkungsdatensätzen (CR1, CR2,...),
c) dem Abgleichmodul (AM) zum iterativen Einlesen von ersten Einschränkungsdatensätzen (CRN1) einer korrespondierenden Einschränkungstabelle (CT1) eines ersten benachbarten Produktionsmoduls (PM1),
zum iterativen Aufbauen der lokalen Einschränkungstabelle (CT) anhand der eingelesenen ersten Einschränkungsdatensätze (CRN1) durch deren Abgleich mit in der lokalen Einschränkungstabelle (CT) gespeicherten Einschränkungsdatensätzen (CR1, CR2,...) sowie
zum iterativen Weiterleiten von zweiten Einschränkungsdatensätzen (CRN2) der lokalen Einschränkungstabelle (CT) an ein zweites benachbartes Produktionsmodul (PM2), und
d) einem Steuermodul (SM) zum Setzen einer Betriebseinstellung gemäß einem diese Betriebseinstellung identifizierenden Einschränkungsdatensatz der lokalen Einschränkungstabelle (CT).

2. Steuereinrichtung nach Anspruch 1, **dadurch gekennzeichnet, dass**
ein jeweiliger Einschränkungsdatensatz (CR1,CR2,...) eine Kennung (ID1,ID2,...) zum Identifizieren der Betriebseinstellung und/oder eine Bereichsangabe oder eine Wertangabe zum Angeben der Einschränkung umfasst.

3. Steuereinrichtung nach einem der vorhergehenden Ansprüche, **dadurch gekennzeichnet, dass**
das Einstellungsverwaltungsmodul (EM) dazu eingerichtet ist, durch das Produktionsmodul (PM) selbst bedingte Einschränkungen spezifisch zu erfassen und daraus lokale Einschränkungsdatensätze (LCR, LCR1, LCR2, LCR3) zu erzeugen und dass das Abgleichmodul (AM) dazu eingerichtet ist, die lokale Einschränkungstabelle (CT) mit den lokalen Einschränkungsdatensätzen zu initialisieren.

4. Steuereinrichtung nach einem der vorhergehenden Ansprüche, **dadurch gekennzeichnet, dass**
das Einstellungsverwaltungsmodul (EM) dazu eingerichtet ist, durch Interaktion des Produktionsmoduls (PM) mit dem Produkt (P) und/oder mit einem benachbarten Produktionsmodul (PM1, PM2) bedingte Einschränkungen spezifisch zu erfassen und daraus interaktionsbedingte Einschränkungsdatensätze (ICR1, ICR2, ICR3) zu erzeugen, und dass
das Abgleichmodul (AM) dazu eingerichtet ist, die interaktionsbedingten Einschränkungsdatensätze mit den in der lokalen Einschränkungstabelle (CT) gespeicherten Einschränkungsdatensätzen abzugleichen.

5. Steuereinrichtung nach einem der vorhergehenden Ansprüche, **dadurch gekennzeichnet, dass**
das Abgleichmodul (AM) dazu eingerichtet ist, zum Abgleich von Einschränkungsdatensätzen jeweils dieselbe Betriebseinstellung betreffende Einschränkungen aus diesen Einschränkungsdatensätzen zu ermitteln sowie zu einer Gesamteinschränkung für diese Betriebseinstellung zu verknüpfen und einen die Gesamteinschränkung angebenden Einschränkungsdatensatz in der lokalen Einschränkungstabelle (CT) zu speichern.

6. Steuereinrichtung nach einem der vorhergehenden Ansprüche, **dadurch gekennzeichnet, dass**
das Einstellungsverwaltungsmodul (EM) dazu eingerichtet ist, ein benachbartes Produktionsmodul (PM1, PM2) dynamisch zu detektieren,
infolge einer solchen Detektion eine Änderungsinformation (CI) zu generieren und
die Änderungsinformation (CI) an das Abgleichmodul (AM) und/oder an ein benachbartes Produktionsmodul (PM1, PM2) zu übermitteln.

7. Steuereinrichtung nach Anspruch 6, **dadurch gekennzeichnet, dass**
das Einstellungsverwaltungsmodul (EM) dazu eingerichtet ist, infolge der Detektion eine Erfassung von durch Interaktion des Produktionsmoduls (PM) mit dem benachbarten Produktionsmodul (PM1, PM2) bedingten Einschränkungen zu veranlassen.

8. Steuereinrichtung nach einem der vorhergehenden Ansprüche, **dadurch gekennzeichnet, dass**
das Abgleichmodul (AM) dazu eingerichtet ist, infolge eines Empfangs einer Änderungsinformation (CI) einen Iterationsschritt beim Einlesen der ersten Einschränkungsdatensätze (CRN1), beim Aufbauen der lokalen Einschränkungstabelle (CT) und/oder beim Weiterleiten der zweiten Einschränkungsdatensätze (CRN2) auszuführen.

9. Steuereinrichtung nach einem der vorhergehenden Ansprüche, **dadurch gekennzeichnet, dass**
die lokale Einschränkungstabelle (CT) eine Versionsinformation (V0, V1) enthält, die infolge eines Empfangs einer Änderungsinformation (CI) und/oder infolge einer Ausführung eines Iterationsschrittes beim Einlesen der ersten Einschränkungsdatensätze (CRN1), beim Aufbauen der lokalen Einschränkungstabelle (CT) und/oder beim Weiterleiten der zweiten Einschränkungsdatensätze (CRN2) geändert wird.

10. Steuereinrichtung nach Anspruch 9, **dadurch gekennzeichnet, dass**
die Versionsinformation (V0, V1) eine Version der lokalen Einschränkungstabelle (CT) angibt und/oder angibt, auf welchen Versionen von korrespondierenden Einschränkungstabellen (CT1, CT2) benachbarter Produktionsmodule (PM1, PM2) die lokale Einschränkungstabelle (CT) basiert.

11. Steuereinrichtung nach Anspruch 9 oder 10, **dadurch gekennzeichnet, dass**
das Abgleichmodul (AM) dazu eingerichtet ist, beim Aufbau der lokalen Einschränkungstabelle (CT) deren Versionsinformation (V0, V1) mit einer Version eines jeweiligen ersten Einschränkungsdatensatzes (CRN1) zu vergleichen und abhängig davon die lokale Einschränkungstabelle (CT) zu aktualisieren und/oder einen der zweiten Einschränkungsdatensätze (CRN2) weiterzuleiten.

12. Steuereinrichtung nach einem der vorhergehenden Ansprüche, **dadurch gekennzeichnet, dass**
das Abgleichmodul (AM) dazu eingerichtet ist, festzustellen, ob sich die lokale Einschränkungstabelle (CT) bei einer Aktualisierung im Rahmen des iterativen Aufbaus ändert, und falls dies nicht zutrifft, einen Satz von Betriebseinstellungen zu ermitteln, die den in der lokalen Einschränkungstabelle (CT) angegebenen Einschränkungen genügen.

13. Steuereinrichtung nach einem der vorhergehenden Ansprüche, **dadurch gekennzeichnet, dass**
mindestens einer der Einschränkungsdatensätze zu einer Einschränkung eine Herkunftsinformation enthält, die angibt, durch welches Produktionsmodul diese Einschränkung bedingt ist, und dass
das Abgleichmodul (AM) dazu eingerichtet ist, bei Empfang einer ein Produktionsmodul betreffenden Änderungsinformation (CI) spezifisch einen Einschränkungsdatensatz mit einer dieses Produktionsmodul angebenden Herkunftsinformation zu aktualisieren.

14. Produktionsmodul (PM, PM1,...,PM3) mit einer Steuereinrichtung (CTL) nach einem der vorhergehenden Ansprüche.

15. Verfahren zum Betreiben einer Steuereinrichtung (CTL) nach einem der Ansprüche 1 bis 13, wobei
a) von Betriebseinstellungen des Produktionsmoduls (PM) einzuhaltende Einschränkungen erfasst werden und jeweils ein Einschränkungsdatensatz (CR1, CR2,...) erzeugt wird, der eine erfasste Einschränkung angibt und die dadurch eingeschränkte Betriebseinstellung identifiziert, wobei ein Produkt (P) dynamisch detektiert wird, infolge einer solchen Detektion eine Änderungsinformation (CI) generiert wird, die Änderungsinformation (CI) an ein Abgleichmodul (AM) und/oder an ein benachbartes Produktionsmodul (PM1, PM2) übermittelt wird und infolge der Detektion eine Erfassung von durch Interaktion des Produktionsmoduls (PM) mit dem Produkt (P) bedingten Einschränkungen veranlasst wird,
b) eine lokale Einschränkungstabelle (CT) mit einer Vielzahl von Einschränkungsdatensätzen (CR1, CR2,...) gespeichert wird,
c) erste Einschränkungsdatensätze (CRN1) einer korrespondierenden Einschränkungstabelle (CT1) eines ersten benachbarten Produktionsmoduls (PM1) iterativ eingelesen werden,
d) die lokale Einschränkungstabelle (CT) anhand der eingelesenen ersten Einschränkungsdatensätze (CRN1) durch deren Abgleich mit in der lokalen Einschränkungstabelle (CT) gespeicherten Einschränkungsdatensätzen (CR1, CR2,...) iterativ aufgebaut wird,
e) zweite Einschränkungsdatensätze (CRN2) der lokalen Einschränkungstabelle (CT) an ein zweites benachbartes Produktionsmodul (PM2) iterativ weitergeleitet werden, und
f) eine Betriebseinstellung gemäß einem diese Betriebseinstellung identifizierenden Einschränkungsdatensatz der lokalen Einschränkungstabelle (CT) gesetzt wird.

16. Computerprogrammprodukt für eine Steuereinrichtung (CTL) nach einem der Ansprüche 1 bis 13, eingerichtet zum Ausführen eines Verfahrens nach Anspruch 15.

17. Computerlesbares Speichermedium mit einem Computerprogrammprodukt nach Anspruch 16.

## Claims

1. Control device (CTL) for a production module (PM) for processing or handling a product (P) in a production system (PS) comprising a multiplicity of production modules (PM, PM1, ..., PM3), with
a) a settings management module (EM) for detecting constraints that must be complied with by operating settings of the production module (PM), and for the respective generation of a constraint data record (CR1, CR2, ...) which specifies a detected constraint and identifies the operating setting restricted thereby, wherein the settings management module (EM) is configured to dynamically detect a product (P), to generate a change notification (CI) in response to such detection, to transmit the change notification (CI) to a synchronizing module (AM) and/or to an adjacent production module (PM1, PM2), and to initiate a capture of constraints imposed by interaction of the production module (PM) with the product (P) in response to the detection,
b) a data memory (MEM) for storing a local constraints table (CT) with a multiplicity of constraint data records (CR1, CR2, ...),
c) the synchronizing module (AM) for iterative reading in of first constraint data records (CRN1) of a corresponding constraints table (CT1) of a first adjacent production module (PM1),
for iterative building of the local constraints table (CT) based on the read-in first constraint data records (CRN1), by synchronizing them with constraint data records (CR1, CR2, ...) stored in the local constraints table (CT), and
for iterative forwarding of second constraint data records (CRN2) of the local constraints table (CT) to a second adjacent production module (PM2), and
d) a control module (SM) for setting an operating setting according to a constraint data record of the local constraints table (CT) which identifies said operating setting.

2. Control device according to Claim 1, **characterized in that** a respective constraint data record (CR1, CR2, ...) comprises an identifier (ID1, ID2, ...) for identifying the operating setting and/or a range indicator or value indicator for specifying the constraint.

3. Control device according to either of the preceding claims, **characterized in that**
the settings management module (EM) is configured to specifically detect constraints that are imposed by the production module (PM) itself, and to generate local constraint data records (LCR, LCR1, LCR2, LCR3) therefrom, and **in that**
the synchronizing module (AM) is configured to initialize the local constraints table (CT) with the local constraint data records.

4. Control device according to any one of the preceding claims, **characterized in that**
the settings management module (EM) is configured to specifically detect constraints imposed by interaction between the production module (PM) and the product (P) and/or an adjacent production module (PM1, PM2), and to generate interaction-related constraint data records (ICR1, ICR2, ICR3) therefrom, and **in that**
the synchronizing module (AM) is configured to synchronize the interaction-related constraint data records with the constraint data records stored in the local constraints table (CT).

5. Control device according to any one of the preceding claims, **characterized in that**
the synchronizing module (AM) is configured to identify constraints relating to the respective same operating setting from constraint data records for synchronizing said constraint data records and to combine the identified constraints in an overall constraint for this operating setting, and to store a constraint data record indicating the overall constraint in the local constraints table (CT).

6. Control device according to any one of the preceding claims, **characterized in that**
the settings management module (EM) is configured to dynamically detect an adjacent production module (PM1, PM2),
to generate a change notification (CI) in response to such detection, and
to transmit the change notification (CI) to the synchronizing module (AM) and/or an adjacent production module (PM1, PM2).

7. Control device according to Claim 6, **characterized in that** the settings management module (EM) is configured to initiate the capture of constraints imposed by interaction of the production module (PM) with the adjacent production module (PM1, PM2) following such detection.

8. Control device according to any one of the preceding claims, **characterized in that**
the synchronizing module (AM) is configured to perform an iteration step in response to receipt of a change notification (CI) when the first constraint data records (CRN1) are read in, when the local constraints table (CT) is built and/or when the second constraint data records (CRN2) are forwarded.

9. Control device according to any one of the preceding claims, **characterized in that**
the local constraints table (CT) contains version information (V0, V1) which is changed in response to receipt of a change notification (CI) and/or in response to a performance of an iteration step when the first constraint data records (CRN1) are read in, when the local constraints table (CT) is built and/or when the second constraint data records (CRN2) are forwarded.

10. Control device according to Claim 9, **characterized in that** the version information (V0, V1) specifies a version of the local constraints table (CT) and/or indicates the versions of corresponding constraints tables (CT1, CT2) of adjacent production modules (PM1, PM2) on which the local constraints table (CT) is based.

11. Control device according to Claim 9 or 10, **characterized in that**
the synchronizing module (AM) is configured to compare the version information (V0, V1) of the local constraints table (CT) with a version of a respective first constraint data record (CRN1) when building said local constraints table, and to update the local constraints table (CT) and/or forward one of the second constraint data records (CRN2) depending on said comparison.

12. Control device according to any one of the preceding claims, **characterized in that**
the synchronizing module (AM) is configured to determine whether the local constraints table (CT) is changed during updating as part of the iterative building, and if this is not true to identify a set of operating settings that satisfy the constraints indicated in the local constraints table (CT).

13. Control device according to any one of the preceding claims, **characterized in that**
at least one of the constraint data records contains an origin notification regarding a constraint, which notification indicates the production module that is the source of this constraint, and **in that**
the synchronizing module (AM) is configured to specifically update a constraint data record with an origin notification indicating a production module upon receipt of a change notification (CI) relating to that production module.

14. Production module (PM, PM1, ..., PM3) having a control device (CTL) according to any one of the preceding claims.

15. Method for operating a control device (CTL) according to any one of Claims 1 to 13, wherein
a) constraints that must be complied with by operating settings of the production module (PM) are detected and a constraint data record (CR1, CR2, ...) specifying a detected constraint and identifying the operating setting restricted thereby is generated for each, wherein a product (P) is dynamically detected, a change notification (CI) is generated in response to such detection, the change notification (CI) is transmitted to a synchronizing module (AM) and/or to an adjacent production module (PM1, PM2), and a capture of constraints imposed by interaction of the production module (PM) with the product (P) is initiated in response to the detection,
b) a local constraints table (CT) with a multiplicity of constraint data records (CR1, CR2, ...) is stored,
c) first constraint data records (CRN1) of a corresponding constraints table (CT1) of a first adjacent production module (PM1) are read in iteratively,
d) the local constraints table (CT) is built iteratively based on the read-in first constraint data records (CRN1), by synchronizing them with constraint data records (CR1, CR2, ...) stored in the local constraints table (CT),
e) second constraint data records (CRN2) of the local constraints table (CT) are iteratively forwarded to a second adjacent production module (PM2), and
f) an operating setting is set according to a constraint data record of the local constraints table (CT) which identifies said operating setting.

16. Computer program product for a control device (CTL) according to any one of Claims 1 to 13, configured to carry out a method according to Claim 15.

17. Computer-readable storage medium with a computer program product according to Claim 16.

## Revendications

1. Dispositif de commande (CTL) d'un module de production (PM) pour traiter ou manipuler un produit (P) dans un système de production (PS) comportant une pluralité de modules de production (PM, PM1, ..., PM3), comportant :
a) un module de gestion de réglage (EM) pour détecter des restrictions à respecter par des réglages de fonctionnement du module de production (PM) ainsi que pour la génération respective d'un jeu de données de restrictions (CR1, CR2, ...) indiquant une restriction détectée et identifiant le réglage de fonctionnement ainsi restreint, le module de gestion de réglage (EM) étant configuré pour détecter dynamiquement un produit (P), pour générer, à la suite d'une telle détection une information de modification (CI), pour transmettre l'information de modification (CI) à un module de comparaison (AM) et/ou à un module de production voisin (PM1, PM2) et pour faire procéder, à la suite de la détection, à une détection de restrictions dues à une interaction du module de production (PM) avec le produit (P) ;
b) une mémoire de données (MEM) pour sauvegarder une table de restrictions locale (CT) avec une pluralité de jeux de données de restrictions (CR1, CR2, ...) ;
c) le module de comparaison (AM) pour la lecture itérative de premiers jeux de données de restrictions (CRN1) d'une table de restrictions correspondante (CT1) d'un premier module de production voisin (PM1),
pour l'établissement itératif de la table de restrictions locale (CT) à l'aide des premiers jeux de données de restrictions lus (CRN1) par leur comparaison avec des jeux de données de restrictions (CR1, CR2, ...) sauvegardés dans la table de restrictions locale (CT) ainsi que pour la retransmission itérative de deuxièmes jeux de données de restrictions (CRN2) de la table de restrictions locale (CT) à un deuxième module de production voisin (PM2) ; et
d) un module de commande (SM) pour fixer un réglage de fonctionnement conformément à un jeu de données de restrictions de la table de restrictions locale (CT) identifiant ce réglage de fonctionnement.

2. Dispositif de commande selon la revendication 1, **caractérisé en ce qu'**un jeu de données de restrictions respectif (CR1, CR2, ...) comprend un identifiant (ID1, ID2, ...) pour identifier le réglage de fonctionnement et/ou une indication de zone ou une indication de valeur pour indiquer la restriction.

3. Dispositif de commande selon l'une des revendications précédentes, **caractérisé en ce que** le module de gestion de réglage (EM) est configuré pour détecter spécifiquement des restrictions dues au module de production (PM) lui-même et pour générer sur cette base des jeux de données de restrictions locaux (LCR, LCR1, LCR2, LCR3) et **en ce que** le module de comparaison (AM) est configuré pour initialiser la table de restrictions locale (CT) avec les jeux de données de restrictions locaux.

4. Dispositif de commande selon l'une des revendications précédentes, **caractérisé en ce que** le module de gestion de réglage (EM) est configuré pour détecter spécifiquement des restrictions dues à une interaction du module de production (PM) avec le produit (P) et/ou avec un module de production voisin (PM1, PM2) et pour générer, sur cette base, des jeux de données de restrictions (ICR1, ICR2, ICR3) dus à l'interaction, et **en ce que** le module de comparaison (AM) est configuré pour comparer les jeux de données de restrictions dus à l'interaction avec les jeux de données de restrictions sauvegardés dans la table de restrictions locale (CT).

5. Dispositif de commande selon l'une des revendications précédentes, **caractérisé en ce que** le module de comparaison (AM) est configuré pour déterminer, aux fins de la comparaison de jeux de données de restrictions, des restrictions concernant respectivement le même réglage de fonctionnement à partir de ces jeux de données de restrictions et pour les associer pour constituer une restrictions globale pour ce réglage de fonctionnement et pour sauvegarder dans la table de restrictions locale (CT) un jeu de données de restrictions indiquant la restriction globale.

6. Dispositif de commande selon l'une des revendications précédentes, **caractérisé en ce que** le module de gestion de réglage (EM) est configuré pour détecter dynamiquement un module de production voisin (PM1, PM2), pour générer une information de modification (CI) à la suite d'une telle détection et pour transmettre l'information de modification (CI) au module de comparaison (AM) et/ou à un module de production voisin (PM1, PM2).

7. Dispositif de commande selon la revendication 6, **caractérisé en ce que** le module de gestion de réglage (EM) est configuré pour faire procéder, à la suite de la détection, à une détection de restrictions dues à une interaction du module de production (PM) avec le module de production voisin (PM1, PM2).

8. Dispositif de commande selon l'une des revendications précédentes, **caractérisé en ce que** le module de comparaison (AM) est configuré pour exécuter, à la suite d'une réception d'une information de modification (CI), une étape d'itération lors de la lecture des premiers jeux de données de restrictions (CRN1), lors de l'établissement de la table de restrictions locale (CT) et/ou lors de la retransmission des deuxièmes jeux de données de restrictions (CRN2).

9. Dispositif de commande selon l'une des revendications précédentes, **caractérisé en ce que** la table de restrictions locale (CT) est une information de versions (V0, V1) qui est modifiée à la suite d'une réception d'une information de modification (CI) et/ou à la suite d'une exécution d'une étape d'itération lors de la lecture des premiers jeux de données de restrictions (CRN1), lors de l'établissement de la table de restrictions locale (CT) et/ou lors de la retransmission des deuxièmes jeux de données de restrictions (CRN2) .

10. Dispositif de commande selon la revendication 9, **caractérisé en ce que** l'information de version (V0, V1) indique une version de la table de restrictions locale (CT) et/ou indique sur quelles versions de tables de restrictions correspondantes (CT1, CT2) de modules de production voisins (PM1, PM2) la table de restrictions locale (CT) se base.

11. Dispositif de commande selon la revendication 9 ou 10, **caractérisé en ce que** le module de comparaison (AM) est configuré pour comparer, lors de l'établissement de la table de restrictions locale (CT), l'information de version (V0, V1) de celle-ci avec une version d'un premier jeu de données de restrictions respectif (CRN1) et pour, en fonction de cela, actualiser la table de restrictions locale (CT) et/ou retransmettre un des deuxièmes jeux de données de restrictions (CRN2).

12. Dispositif de commande selon l'une des revendications précédentes, **caractérisé en ce que** le module de comparaison (AM) est configuré pour constater si la table de restrictions locale (CT) se modifie lors d'une actualisation dans le cadre de l'établissement itératif et, si cela n'est pas le cas, pour déterminer un jeu de réglages de fonctionnement qui suffisent aux restrictions indiquées dans la table de restrictions locale (CT).

13. Dispositif de commande selon l'une des revendications précédentes, **caractérisé en ce qu'**au moins un des jeux de données de restrictions contient, pour une restriction, une information sur l'origine qui indique à quel module de production cette restriction est due et **en ce que** le module de comparaison (AM) est configuré pour actualiser spécifiquement, à la réception d'une information de modification (CI) concernant un module de production, un jeu de données de restrictions avec une information sur l'origine indiquant ce module de production.

14. Module de production (PM, PM1, ..., PM3) comportant un dispositif de commande (CTL) selon l'une des revendications précédentes.

15. Procédé de fonctionnement d'un dispositif de commande (CTL) selon l'une des revendications 1 à 13,
a) des restrictions à respecter par des réglages de fonctionnement du module de production (PM) étant détectées et respectivement un jeu de données de restrictions (CR1, CR2, ...) étant généré, lequel indique une restriction détectée et identifie le réglage de fonctionnement ainsi restreint, un produit (P) étant détecté dynamiquement, une information de modification (CI) étant générée à la suite d'une telle détection, l'information de modification (CI) étant transmise à un module de comparaison (AM) et/ou à un module de production voisin (PM1, PM2) et, à la suite de la détection, une détection de restrictions dues à une interaction du module de production (PM) avec le produit (P) étant provoquée ;
b) une table de restrictions locale (CT) étant sauvegardée avec une pluralité de jeux de données de restrictions (CR1, CR2, ...) ;
c) des premiers jeux de données de restrictions (CRN1) d'une table de restrictions correspondante (CT1) d'un premier module de production voisin (PM1) étant lus itérativement ;
d) la table de restrictions locale (CT) étant établie itérativement à l'aide des premiers jeux de données de restrictions lus (CRN1) par leur comparaison avec des jeux de données de restrictions (CR1, CR2, ...) sauvegardés dans la table de restrictions locale (CT) ;
e) des deuxièmes jeux de données de restrictions (CRN2) de la table de restrictions locale (CT) étant retransmis itérativement à un deuxième module de production voisin (PM2) ; et
f) un réglage de fonctionnement étant fixé conformément à un jeu de données de restrictions de la table de restrictions locale (CT) identifiant ce réglage de fonctionnement.

16. Produit de programme informatique pour un dispositif de commande (CTL) selon l'une des revendications 1 à 13, configuré pour exécuter un procédé selon la revendication 15.

17. Support de mémoire lisible par ordinateur avec un produit de programme informatique selon la revendication 16.
